# EUROPÄISCHE PATENTSCHRIFT

(11) **EP 1 619 365 B1**
(45) Veröffentlichungstag und Bekanntmachung des Hinweises auf die Patenterteilung: **05.11.2008**
(21) Anmeldenummer: 05014339.5
(22) Anmeldetag: 01.07.2005
(51) Int. Cl.: F02B 37/007, F02B 37/16, F02B 37/18, F01N 3/20

(54) **Abgasnachbehandlung mit sequentieller Aufladung**
Exhaust gas after-treatment with sequential supercharging
Post-traitement des gaz d'échappement avec suralimentation séquentielle

(30) Priorität: 21.07.2004 DE 102004035325
(43) Veröffentlichungstag der Anmeldung: 25.01.2006
(73) Patentinhaber: Bayerische Motoren Werke Aktiengesellschaft, 80809 München (DE)
(72) Erfinder: Dusel, Kurt, 80939 München (DE); Tribulowski, Jan, Dr., 85283 Wolnzach (DE)

(56) Entgegenhaltungen:
- EP-A- 1 394 393
- DE-A1- 3 637 534
- DE-A1- 4 229 722
- JP-A- 3 115 735
- US-A- 4 428 199
- US-A- 5 140 817
- US-A1- 2003 188 535
- PATENT ABSTRACTS OF JAPAN Bd. 013, Nr. 148 (M-812), 11. April 1989 (1989-04-11) & JP 63 309726 A (YANMAR DIESEL ENGINE CO LTD), 16. Dezember 1988 (1988-12-16)

## Beschreibung

Die vorliegende Erfindung betrifft einen Verbrennungsmotor mit den Merkmalen aus dem Oberbegriff des Patentanspruchs 1.

Aus der US 5,140,817 oder der JP 03115735 ist ein Verbrennungsmotor mit mehreren Zylindern bekannt, deren Abgase mit zwei getrennten Krümmern zu zwei Abgasströmen zusammenfassbar sind. Die Abgasströme sind durch eine Verbindung miteinander verbindbar, wobei hinter der Verbindung zwei Abgasturbolader angeordnet sind. Beide Abgasturbolader sind durch die Abgasströme antreibbar, um Frischluft für den Verbrennungsmotor auf Ladedruck zu verdichten. Einer der beiden Abgasturbolader ist ab- oder zuschaltbar ausgeführt, um in Abhängigkeit der Drehzahl des Verbrennungsmotors betrieben zu werden.

Nachteilig an dem gattungsgemäßen Verbrennungsmotor ist eine fehlende Abgasnachbehandlungsvorrichtung, um die heute gültigen strengen Emissionsvorschriften zu erfüllen.

Aus der EP 1 394 393 A1 ist ein Verbrennungsmotor mit einem Abgasturbolader bekannt. In Strömungsrichtung des Abgases hinter dem Abgasturbolader ist eine Abgasreinigungsvorrichtung angeordnet. Diese weist einen Temperatursensor auf, zur Ermittlung des Zeitpunktes, wann die Abgasreinigungsvorrichtung ihre Konvertierungstemperatur erreicht hat.

Nachteilig an der Abgasnachbehandlungsvorrichtung ist die nur über den Ladedruck beeinflussbare Aufheizgeschwindigkeit für eine schnellere Konvertierung der Rohemissionen.

Aufgabe der vorliegenden Erfindung ist es, eine Abgasnachbehandlungsvorrichtung mit einem Katalysator aufzuzeigen, der schnell aufheizbar ist und somit seine Betriebstemperatur schneller erreicht.

Diese Aufgabe wird durch die Merkmale des Patentanspruchs 1 gelöst. Bevorzugte Ausführungsformen des erfindungsgemäßen Verbrennungsmotors sind in den abhängigen Ansprüchen 2 bis 4 beansprucht.

Durch die sequentielle Aufladung besteht die Möglichkeit je nach Betriebszustand einen oder beide Abgasturbolader zu betreiben. Durch geeignete Mittel ist es möglich, die beiden Gasströme miteinander zu verbinden und lediglich einen Abgasturbolader zu betreiben, der sich bei einem Kaltstart dadurch schneller aufwärmt. Die Gase die diesen aufgewärmten Abgasturbolader verlassen weisen dann ihrerseits noch eine vergleichsweise hohe Temperatur auf, so dass der Vorkatalysator und der Hauptkatalysator ebenfalls schneller aufgeheizt werden. Dadurch verbessert sich insgesamt die Abgasnachbehandlung beim Kaltstartverhalten. Sobald der eine Abgasturbolader, der Vor- und/oder der Hauptkatalysator die gewünschte Temperatur aufweisen, kann der zweite Abgasturbolader in Betrieb genommen werden.

Es war für den Fachmann überaus erstaunlich und nicht zu erwarten, dass der erfindungsgemäße Verbrennungsmotor ein wesentlich besseres Kaltstartverhalten aufweist. Die Abgasemissionswerte sind insbesondere beim Kaltstartverhalten bei dem erfindungsgemäßen Motor wesentlich verbessert. Der erfindungsgemäße Verbrennungsmotor ist einfach und kostengünstig herzustellen und zu betreiben.

Erfindungsgemäß weist der erfindungsgemäße Verbrennungsmotor einen Sensor, der mindestens einen Abgasemmissionssignal ermittelt, auf. Ein solcher Wert kann beispielsweise Lambda sein. Dieser Sensor kann im Bereich der Abgasturbolader, der Vorkatalysatoren und/oder des Hauptkatalysators angeordnet sein. In Abhängigkeit des Signals wird ein Abgasturbolader ab- oder zugeschaltet, wobei der Abgasturbolader abgeschaltete wird, solange sich das Signal unter einem bestimmten Sollwert befindet. Sobald dieser Sollwert erreicht bzw. überschritten wird, wird der zweite Abgasturbolader hinzugeschaltet, sofern es die Lastsituation des Motors erfordert.

Vorzugsweise weist der Verbrennungsmotor ein Absperrorgan auf, mit dem ein Abgasturbolader von den Abgasströmen zu mindestens teilweise abtrennbar ist, so dass diese vollständig oder nahezu vollständig durch den nicht abgetrennten Abgasturbolader strömen. Besonders bevorzugt weist das Absperrorgan einen Leckagestrom auf, der so groß ist, dass abgeschaltete Abgasturbolader auf einer gewünschten Drehzahl gehalten wird, ohne dass er Frischluft verdichtet. Dieser Leckagestrom wird besonders bevorzugt nur im betriebswarmen Zustand zugelassen. Dies erfolgt vorzugsweise durch ein Stellorgan, das die Klappe beim Kaltstart völlig schließt und im betriebswarmen Zustand gezielt öffnet.

Vorzugsweise sind die Lader ölgeschmiert. Vorzugsweise wird das Öl zu den Ladern gefördert. Besonders bevorzugt weist die Ölförderung eine Mittel, beispielsweise regelbare Pumpen und/oder Ventile, so dass besonders bevorzugt der abgeschaltete Lader im kalten Zustand nicht mit Schmieröl versorgt wird.

Weiterhin bevorzugt weist der erfindungsgemäße Verbrennungsmotor Stellorgane auf, die so einstellbar sind, dass an der Luftseite des abgeschalteten Abgasturboladers Ladedruck anliegt. Diese bevorzugte Ausführungsform der vorliegenden Erfindung hat den Vorteil, dass bei Inbetriebnahme des abgeschalteten Abgasturboladers dessen Anspringverhalten erheblich reduziert werden kann.

Vorzugsweise ist jedem Abgasturbolader ein Vorkatalysator oder ein motornaher Hauptkatalysator nachgeordnet.

In einer anderen bevorzugten Ausführungsform ist nur dem permanent in Betrieb befindlichen Abgasturbolader ein Vorkatalysator oder ein motornaher Hauptkatalysator nachgeordnet.

In einer weiteren bevorzugten Ausführungsform ist beiden Turboladern ein gemeinsamer Vorkatalysator nachgeordnet.

Im folgenden wird die Erfindung anhand der Figuren 1 bis 4 erläutert. Diese Erläuterungen sind lediglich beispielhaft und schränken den allgemeinen Erfindungsgedanken nicht ein.
**Figur 1** zeigt einen erfindungsgemäßen Motor mit 6 Zylindern.
**Figur 2** zeigt einen erfindungsgemäßen Motor mit 8 Zylindern.
**Figur 3** zeigt eine modifizierte Ausführungsform des Verbrennungsmotors gemäß Figur 1.
**Figur 4** zeigt eine weitere modifizierte Ausführungsform des Verbrennungsmotors gemäß Figur 1.

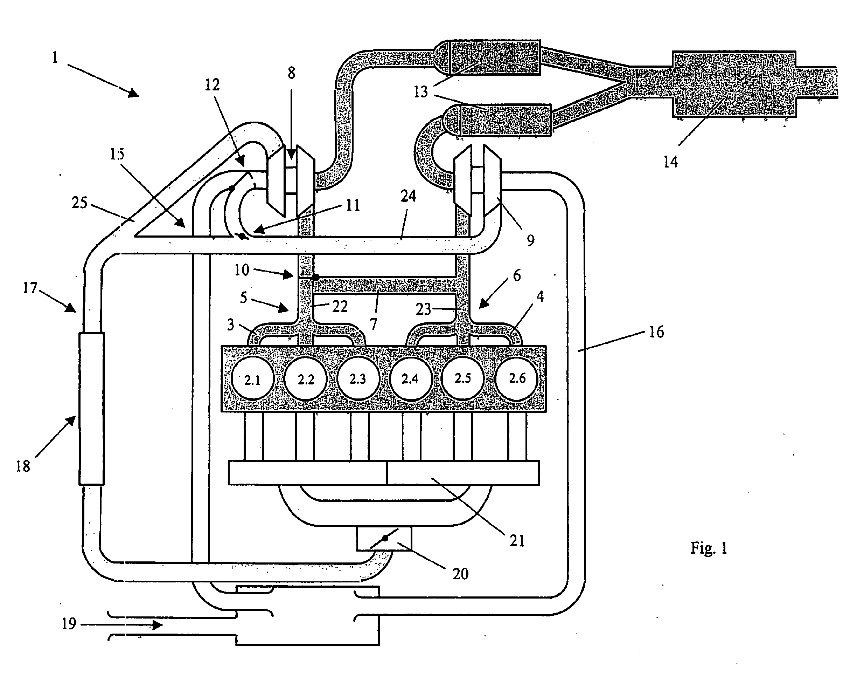

   In Figur 1 ist der erfindungsgemäße Verbrennungsmotor als 6-Zylinder-Motor 1 dargestellt, der die Zylinder 2.1 bis 2.6 aufweist. Die Abgase der Zylinder 2.1 bis 2.3 werden in dem Krümmer 3 zu dem Abgasstrom 5 zusammengefaßt. Die Abgase der Zylinder 2.4 bis 2.6 werden mit dem Krümmer 4 zu dem zweiten Abgasstrom 6 zusammengefaßt. Die Abgase des Abgasstroms 5 werden mit der Rohrleitung 22 zu dem Abgasturbolader 8 geleitet, in dem sie eine Turbine antreiben, die Frischluft, die über die Rohrleitung 15 angesaugt wird, verdichtet. Die Abgasströme 6 werden über die Rohrleitung 23 zu dem Abgasturbolader 9 geleitet, den sie ebenfalls antreiben, so dass Frischluft, die über die Leitung 16 angesaugt wird, verdichtet wird. Die durch die beiden Abgasturbolader verdichtete Frischluft strömt durch die Leitungen 24 bzw. 25 und wird in der Leitung 17 zusammengefaßt, über einen Ladekühler 18 geleitet und durchströmt dann eine Drosselklappe 20, mit der die in den Verbrennungsmotor geförderte Frischluft geregelt wird. Die Frischluft wird dann in dem Verteiler 21 auf die sechs Zylinder verteilt. Die Abgasströme 5, 6 durchströmen nach den Abgasturboladern jeweils einen Vorkatalysator 13 und deren Hauptkatalysator 14 und verlassen dann den Auspuff. Nicht erfindungsgemäß weist der Verbrennungsmotor einen Temperatursensor auf (nicht dargestellt), der in dem vorliegenden Fall in dem Vorkatalysator angeordnet ist, der dem Abgasturbolader 9 nachgeordnet ist. Misst dieser Temperatursensor, beispielsweise bei einem Kaltstart, eine Temperatur unterhalb eines Sollwertes, wird die Klappe 10 in der Rohrleitung 22 geschlossen, so dass der Abgasstrom 5 über die Leitung 7 zu dem Abgasturbolader 9 geleitet wird. Dadurch erwärmt sich der Abgasturbolader 9 schneller und die nachfolgende Abgasreinigung, die nur bei einem bestimmten Abgastemperaturniveau gut funktioniert, springt schneller an. Die verdichtete bzw. angesaugte Luft wird dann wie oben beschrieben über die Leitungen 24 und 17 zu den Zylindern geleitet. Zur Reduzierung des Ansprechverhaltens des Abgasturboladers 8 bei dessen Wiederinbetriebnahme ist es vorteilhaft, wenn ein kleiner Leckagestrom die Klappe 10 passiert und die Turbine des Abgasturboladers 8 auf Drehzahl hält, ohne dass Frischluft gefördert wird. Dies ist bei einem betriebswarmen Motor vorteilhaft. In der Leitung 24 befindet sich ein Ventil 11 und in der Leitung 15 eine Rückschlagklappe 12. Im Teillastbereich; d.h. wenn die Klappe 10 geschlossen ist, wird das Ventil 11 zumindest teilweise geöffnet, so dass der Druck, der in Leitung 24 anliegt im wesentlichen auch hinter dem Ventil 11 anliegt und somit die Rückschlagklappe 12 in die in der Figur 1 dargestellten Position drückt, so dass die Saugseite des Abgasturboladers 8 von der Frischluftzufuhr in Leitung 15 abgetrennt ist. Durch die Öffnung des Ventils 11 und durch die Rückschlagklappe liegt an der Saugseite des Abgasturboladers Ladedruck an, so dass dieser sobald die Klappe 10 wieder geöffnet wird, nur eine sehr kurze oder gar keine Ansprechzeit benötigt um den gewünschten Ladedruck zur Verfügung zustellen. Sobald das Temperaturniveau so ist, dass beide Abgasturbolader hinreichend gut arbeiten, wird die Klappe 10 geöffnet und das Ventil 11 geschlossen. Die Verbindung von Leitung 15 zu Leitung 24 wird durch Klappe 12 verschlossen und der Abgasturbolader 8 kann auf der Saugseite Frischluft anziehen und diese Verdichten.

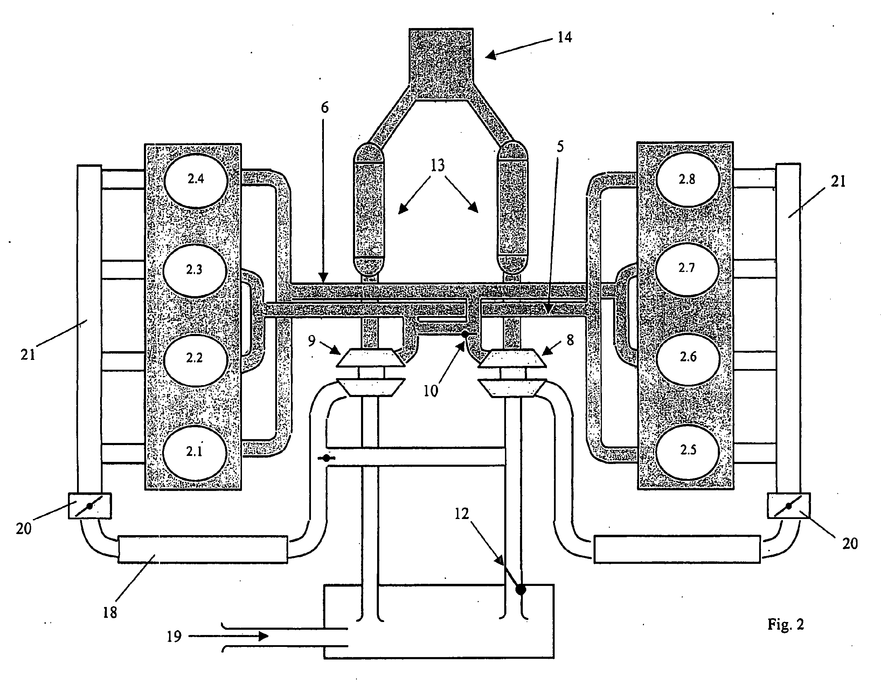

   In **Figur 2** ist der erfindungsgemäße Verbrennungsmotor mit 8 Zylindern dargestellt. Die Zylinder 2.2, 2.3, 2.5 und 2.8 sind zu einem Abgasstrom 5 und die Zylinder 2.1, 2.4, 2.6 und 2.7 zu dem anderen Abgasstrom 6 zusammengefaßt. Im übrigen funktioniert die Abgasturboladerabschaltung und die Zusammenfassung der beiden Abgasströme wie bei Figur 1 dargestellt.

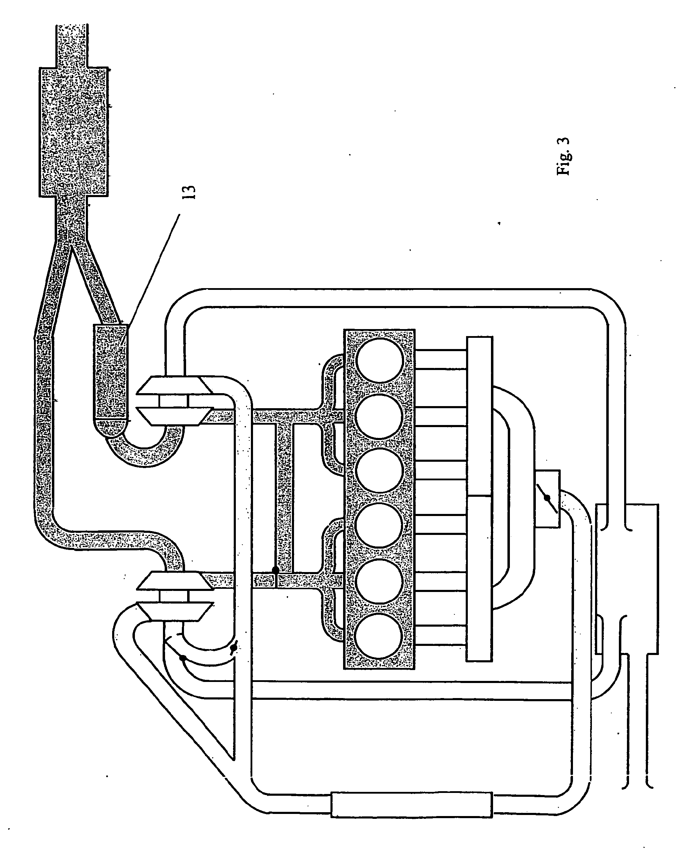

   **Figur 3** zeigt den Verbrennungsmotor gemäß Figur 1, wobei in dem vorliegenden Fall nur dem Abgasturbolader 9 ein Vorkatalysator 13 nachgeordnet ist. Der dem Abgasturbolader 9 nachgeordnete Vorkatalysator 13 springt sehr schnell an, da dieser ein Vergleichsweise kleines Volumen aufweist. Des weiteren stellt dies Ausführungsform eine Kosten- und Gewichtsersparnis dar.

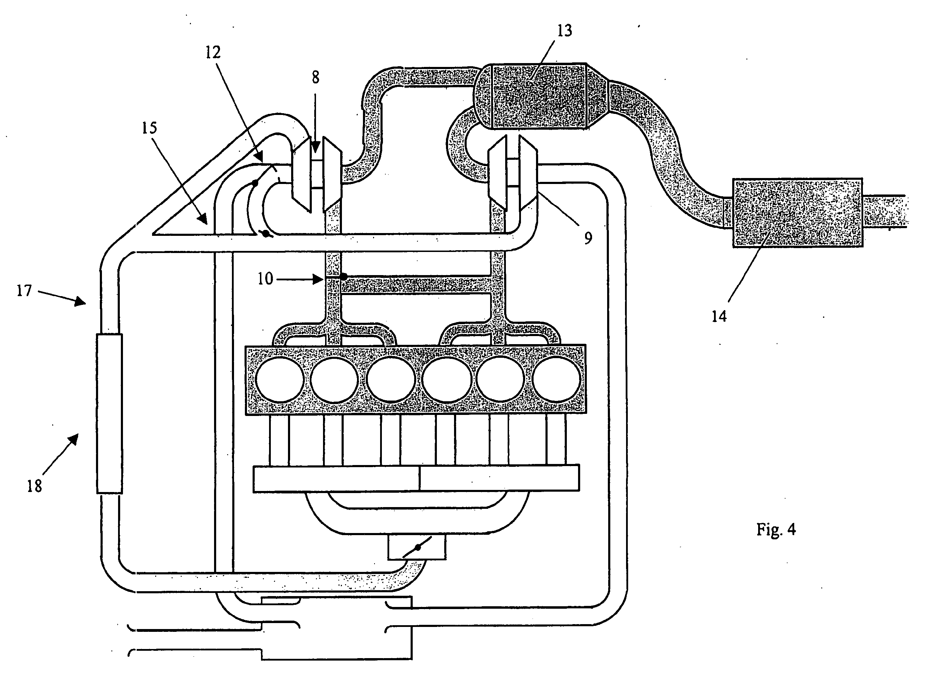

   **Figur 4** zeigt den Verbrennungsmotor gemäß Figur 1 mit einem gemeinsamen Vorkatalysator für beide Abgasströme.

### Bezugszeichenliste:

- 1: Verbrennungsmotor
- 2.1 bis 2.8: Zylinder
- 3, 4: Krümmer
- 5, 6: Abgasströme
- 7: Verbindungsleitung
- 8: erster Abgasturbolader
- 9: zweiter Abgasturbolader
- 10: Klappe
- 11: Ventil
- 12: Rückschlagklappe
- 13: Vorkatalysator
- 14: Hauptkatalysator
- 15, 16: Frischluftzuleitung
- 17: Druckleitung der Frischleitung nach den Abgasturboladern
- 18: Ladeluftkühler
- 19: Frischluft
- 20: Drosselklappe
- 21: Frischluftverteiler
- 22, 23: Rohrleitung
- 24: Rohrleitung
- 25: Rohrleitung

## Patentansprüche

1. Verbrennungsmotor (1) mit zumindest vier Zylindern (2.1 - 2.8), deren Abgase mit zwei getrennten Krümmern (3, 4) zu mindestens zwei Abgasströme (5, 6) zusammenfassbar sind, wobei die Abgasströme durch eine Verbindung (7) verbindbar sind und mit zwei Abgasturboladern (8, 9), die durch die Abgasströme antreibbar sind und Frischluft für den Verbrennungsmotor auf Ladedruck verdichten, wobei ein Abgasturbolader (8, 9) ab- oder zuschaltbar ist, **dadurch gekennzeichnet, dass** er einen Sensor, der mindestens ein Abgasemmisionssignal ermittelt, aufweist und dass in Abhängigkeit des Signals ein Abgasturbolader ab- oder zuschaltbar ist, wobei zumindest dem permanent im Betrieb befindlichen Abgasturbolader ein Vorkatalysator (13) nachgeordnet ist.

2. Verbrennungsmotor nach Anspruch 1, **dadurch gekennzeichnet, dass** ein Abgasturbolader (8) mit einem Absperrorgan (10) von den Abgasströmen zumindest teilweise abtrennbar ist.

3. Verbrennungsmotor nach Anspruch 2, **dadurch gekennzeichnet, dass** er Stellorgane (11, 12) aufweist, die so einstellbar sind, dass an der Luftseite des abgeschalteten Abgasturboladers Ladedruck anliegt.

4. Verbrennungsmotor nach einem der voranstehenden Ansprüche, **dadurch gekennzeichnet, dass** jeweils einem Abgasturbolader ein Vorkatalysator nachgeordnet ist.

## Claims

1. An internal combustion engine (1) comprising at least four cylinders (2.1 - 2.8), the exhaust gases for which can be combined in two separate manifolds (3, 4) to form at least two exhaust flows (5, 6), wherein the exhaust flows are connectable by a connection (7), also comprising two turbochargers (8, 9) which are drivable by the exhaust flows and compress fresh air to the boost pressure for the internal combustion engine, wherein a turbocharger (8, 9) can be switched on or off, **characterised in that** it comprises a sensor which detects at least one exhaust emission signal in dependence on which a turbocharger can be switched on or off, wherein at least one catalytic preconverter (13) is disposed downstream of the turbocharger permanently in operation.

2. An internal combustion engine according to claim 1, **characterised in that** a turbocharger (8) can be at least partly cut off from the exhaust flows by a shut-off means (10).

3. An internal combustion engine according to claim 2, **characterised in that** it comprises adjustment means (11, 12) which are adjustable so that the boost pressure is applied to the downstream side of the switched-off turbocharger.

4. An internal combustion engine according to any of the preceding claims, **characterised in that** a catalytic preconverter is disposed downstream of each turbocharger.

## Revendications

1. Moteur à combustion interne (1) comportant au moins quatre cylindres (2.1 - 2.8) dont les gaz d'échappement sont réunis en au moins deux courants de gaz d'échappement (5, 6) à l'aide de collecteurs séparés (3, 4),
les courants de gaz d'échappement étant reliés par une liaison (7), et deux turbocompresseurs de gaz d'échappement (8, 9), entraînés par les courants de gaz d'échappement pour comprimer de l'air frais à la pression d'alimentation du moteur à combustion interne,
un turbocompresseur de gaz d'échappement (8, 9) pouvant être coupé ou branché,
**caractérisé en ce qu'**
il comporte au moins un capteur déterminant au moins un signal d'émission de gaz d'échappement, et
en fonction du signal, un turbocompresseur de gaz d'échappement est branché et/ou est coupé, et
un précatalyseur (13) est associé au moins au turbocompresseur de gaz d'échappement qui travaille en mode permanent.

2. Moteur à combustion interne selon la revendication 1,
**caractérisé en ce qu'**
un turbocompresseur de gaz d'échappement (8) muni d'un organe de coupure (10) peut être coupé au moins partiellement des courants de gaz d'échappement.

3. Moteur à combustion interne selon la revendication 2,
**caractérisé en ce qu'**
il comporte des organes d'actionnement (11, 12) réglables de façon que la pression d'alimentation soit appliquée au côté air du turbocompresseur de gaz d'échappement à l'état coupé.

4. Moteur à combustion interne selon les revendications précédentes,
**caractérisé en ce qu'**
à chaque turbocompresseur de gaz d'échappement, est associé un précatalyseur installé en aval.
